Europäisches Patentamt

European Patent Office

Office européen des brevets

(11) Publication number: **0 243 544**
**B1**

## EUROPEAN PATENT SPECIFICATION

(45) Date of publication of the patent specification:
05.04.89

(51) Int. Cl.⁴: **A23J 1/00, A23J 3/00**

(21) Application number: 86303231.4

(22) Date of filing: 29.04.86

(54) Method of producing low-fat whey proteins.

(43) Date of publication of application:
04.11.87 Bulletin 87/45

(45) Publication of the grant of the patent:
05.04.89 Bulletin 89/14

(84) Designated Contracting States:
AT BE CH DE FR GB IT LI LU NL SE

(56) References cited:
EP-A- 0 094 263
FR-A- 2 198 704
FR-A- 2 331 964
US-A- 3 969 336

(73) Proprietor: EXPRESS FOODS GROUP LIMITED,
430 Victoria Road, South Ruislip Middlesex
HA4 0HF(GB)

(72) Inventor: Khow, Ju Huat, 37 Athelstan House Homerton
Road, Hackney London E9 5PH(GB)
Inventor: Allen, Richard, 18 Willow Grove Beverley,
North Humberside(GB)
Inventor: Phillips, David John, 42 Fulton Close High
Wycombe, Buckinghamshire(GB)

(74) Representative: Taylor, Phillip Kenneth et al, W.P.
THOMPSON & CO. Coopers Building Church Street,
Liverpool L1 3AB(GB)

**Description**

The present invention relates to the preparation of low fat whey proteins.

Whey proteins are used extensively as ingredients of many foodstuffs, usually in the form of what are termed "whey protein concentrates". Whey, however, contains fatty material which is still present in the concentrates such as those produced by ultrafiltration. The presence of this fatty material can create problems in the same foodstuffs which incorporate such concentrates, in that the fatty material may separate on to the surface of the product and through oxidation by contact with air can cause deterioration in the flavour of foodstuffs containing such concentrates. The presence of the fatty material also has a deleterious effect on the functional properties of whey protein concentrates and reduces the range of application of such products in the food industry. It has long been highly desirable therefore that such fatty material be separated from whey proteins before they are used in the production of foodstuffs.

The methods which have been hitherto suggested for separating the fatty material have so far not been such as to give rise to a commercially viable process capable of dealing with large quantities of material. Thus in Dutch Patent Application No. 7 311 095, (equivalent to FR-A 2 198 704 and GB-A 1 402 977) it has been suggested that the pH of ultrafiltered whey which has optionally been subjected to gel filtration be adjusted to a value of from 4.4 to 5.0 to effect precipitation of the fatty material and to then separate this fatty material by micro-filtration to recover the filtrate which contains the soluble protein. Such a process is, however, very time consuming and therefore expensive, and does not provide the basis for a commercially viable process for treating large quantities of materials.

Another suggested process is that described in GB-A 1 519 897 (equivalent to FR-A 2 331 964) which provides a method of clarifying a liquid which contains whey protein which comprises demineralising said liquid so as to obtain a liquid having an ash:protein ratio not exceeding 0.08:1, adjusting the protein content of the liquid if necessary to a value not exceeding 1.5% by weight, adjusting the pH of the liquid to a value in the range of 4.2 to 4.8 without disturbance of the liquid so as to cause sedimentation to occur and separating off the sediment under turbulence free conditions. Whilst this process appears to show promise on a small laboratory scale, it has been found that it does not scale up to provide adequate sedimentation rates to enable a commercially viable process to be achieved in the treatment of large quantities of material.

It is an object of the present invention to provide a process in which separation of the fatty material from liquids containing whey protein is effected and which is capable of being worked on a large scale to provide a viable commercial process.

It has now been surprisingly found that separation of a fatty material precipitated from such an aqueous system by pH adjustment can be effected, despite the turbulence introduced, if the separation is effected by air flotation in the presence of isinglass as a flocculating agent. It has been found that despite the turbulence, effective separation and recovery of fatty material can be achieved in the presence of isinglass at separation rates which enable large quantities of material to be processed on a commercially viable scale whilst still maintaining clarity in the protein-containing filtrate which results from the process.

Accordingly, the present invention provides a process for producing a low-fat whey protein which comprises forming an aqueous system containing whey protein in an amount not greater than 1.5% by weight and having an ash:protein ratio not exceeding 0.08:1, adjusting the pH of the solution to a value in the range of from 4.0 to 4.8 and separating the resultant precipitate from the aqueous system by air flotation in the presence of isinglass.

Whilst other ways of producing an aqueous system having the above characteristics, such as, for example, subjecting clarified whey to demineralization, dilution etc., are included within the general scope of the present invention, it is preferred to produce the aqueous system by dilution of liquid whey protein concentrates produced by ultra-filtration of clarified whey.

Whilst the protein content of the aqueous system may be up to 1.5% by weight, aqueous systems containing from 1 to 1.2% by weight of protein are preferred. Again, although the ash:protein ratio in the aqueous system may be as high as 0.08:1 lower ash:protein ratios are preferred, e.g. in the range of 0.05:1 to 0.025:1 and most preferably those obtained in liquid whey protein 75% concentrates produced by ultrafiltration of clarified whey.

Lower percentage concentrates, e.g. 65% or even 60% could be used but are not preferred. The lower percentage protein concentrates would have higher retained contents of lactose than the higher percentage protein concentrates and since the aqueous system necessary for carrying out effective fat separation would dilute this retained lactose beyond the point of economic recovery, the lower the percentage protein concentrate, the greater the loss of lactose would be. In practice, due to variations in the composition of milk supply the actual analysis figures for whey protein concentrates vary considerably. Thus the analysis for ten successive concentrates manufactured over a period of a month from cheddar cheese whey by centrifuging, pasteurization at 72°C for 15 seconds, cooling to 50°C followed by ultrafiltration and diafiltration to produce a whey protein concentrate having about 75% protein content on a dry basis (w/w) are listed in Table I.

2

Table I

| No. | % Total Solids | % Total protein | % Fat | % Ash | % NPN | $\dfrac{\text{Total protein}}{\text{Total solids}} \times 100$ | $\dfrac{\text{Ash}}{\text{Total protein}}$ |
|---|---|---|---|---|---|---|---|
| 1 | 25.13 | 19.43 | 1.18 | 0.70 | 1.43 | 77.3 | 0.036 |
| 2 | 24.31 | 20.13 | 2.29 | 0.61 | 1.41 | 82.8 | 0.030 |
| 3 | 24.54 | 19.88 | 2.83 | 0.52 | 1.68 | 81.0 | 0.026 |
| 4 | 23.90 | 19.11 | 1.91 | 0.52 | 1.38 | 80.0 | 0.027 |
| 5 | 24.27 | 19.60 | 2.94 | 0.334 | 0.89 | 80.8 | 0.017 |
| 6 | 20.57 | 16.99 | 1.25 | 0.45 | 1.09 | 82.6 | 0.026 |
| 7 | 24.03 | 19.80 | 1.90 | 0.44 | 1.54 | 82.4 | 0.022 |
| 8 | 24.40 | 19.95 | 2.50 | 0.497 | 1.63 | 81.8 | 0.025 |
| 9 | 23.79 | 19.13 | 2.60 | 0.66 | 1.50 | 80.4 | 0.035 |
| 10 | 24.25 | 19.64 | 2.28 | 0.57 | 1.52 | 81.0 | 0.029 |
| Avg. | 23.90 | 19.37 | 2.23 | 0.53 | 1.41 | 81.0 | 0.027 |

Protein concentrates produced by other methods may, of course, be used provided that the ash: protein ratio is within the required range, i.e., not greater than 0.08:1. If the concentrate used would result in the ash:protein ratio exceeding 0.08:1 then demineralisation of the concentrate or of the resulting aqueous system would become necessary. In general therefore, it is preferred to use liquid protein concentrates which can be directly diluted to provide protein solutions of the requisite protein concentration and having an ash:protein ratio below the upper limit of 0.08:1.

The process of the invention is preferably carried out at a temperature between 12°C and 25°C, most preferably at about 20°C. At temperatures higher than 25°C, there is some protein loss and as in most food processes, bacteriological growth problems arise. Working at temperatures lower than 12°C whilst further reducing the possibility of bacteriological growth reduces to some extent the clarity of the protein solutions obtained and is therefore not preferred.

The pH adjustment of the aqueous system differs from the suggested processes of the prior art in that in general lower pH's are preferred. Thus, whilst the pH can be as high as 4.8 it is preferable to work in the range 4.2 to 4.4 and most preferably at a pH of substantially 4.3.

The separation process of the present invention results on the one hand in a high fat sludge and a low fat clarified liquor. Both materials can and in normal production are processed to form powders which are respectively high and low fat protein concentrate powders.

Isinglass is produced commercially by a number of manufacturers in a number of forms and the efficacy of this product for any particular application depends in part on the method of production used by the manufacturer. Whilst all commercially available forms of isinglass have been found to work some exhibit a higher efficiency than others, and it is usually possible as with many commercially available additives to achieve optimum performance of the additive by selecting an appropriate source of the material or where the manufacturer is prepared to adjust his manufacturing method to optimise the performance of this product. It has been found that isinglass produced under the name BIOFINE P19 by Biocon (a multinational group of companies) gives good results in the process of the present invention. The isinglass is purchased as a particulate material which is dissolved in water to produce a working strength solution which should be used as soon as possible after it is made and in any event preferably within 24 hours as the efficacy of the solution as a flocculant deteriorates rapidly and is usually of too low an efficiency after 24 hours for practical commercial use. In practice each source will have its own working life in solution which should be determined by laboratory trial. A working solution of about 5g per litre has been found to work well. Higher concentrations may be too viscous for efficient handling. Lower concentrations require larger storage facilities and are in general not preferred.

The working strength solution is added in an amount to provide an effective amount of isinglass. In the case of BIOFINE P19 about 0.18 g thereof per litre of pH-adjusted aqueous medium is adequate although larger amounts can be incorporated.

The invention will be further illustrated with reference to the accompanying drawings, in which:

Fig. 1 is a schematic diagram showing one embodiment of the invention wherein accumulated whey protein concentrate is diluted to form a substantial volume of aqueous system and then processed by the method of the invention.

Fig. 2 is a schematic illustration of another embodiment of the invention in which whey protein concentrate is continuously diluted to form an aqueous system which is processed by the method of the invention.

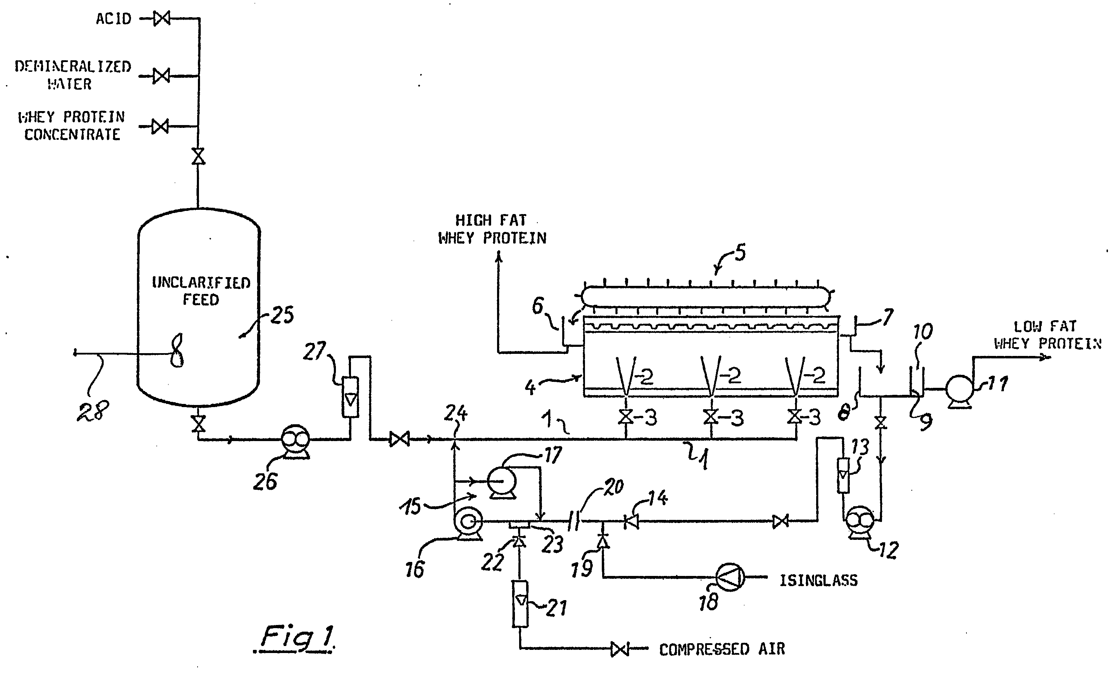

Referring to Fig.1 of the drawings, a mixture of pH adjusted aqueous medium, air and isinglass is fed via conduit 1 to a plurality of diffuser cones 2 disposed in the flotation chamber 4 via their associated valves 3. The foam and associated floc rises through the liquor in the flotation chamber and is removed by scraper system 5 and fed into a trough 6 from where the mixture which is a high fat whey protein concentrate, is taken off for further treatment, such as spray drying.

The clarified liquor in the flotation chamber is removed via a trough 7 to a tank 8 having an overflow baffle plate 9 over which most of the clarified liquor flows into the compartment 10 and then via pump 11 to further treatment such as ultrafiltration to form a low-fat whey protein concentrate which may then be spray dried to form a powder.

Clarified liquor is fed from tank 8 via a pump 12, flow rate indicator 13 and a non-return valve 14 to a recycle system 15 comprising a mixer 16 (provided with a square hole high shear screen and impeller, not shown), and a centrifugal pump 17. Isinglass solution is fed to the recycle system via dosing pump 18, non-return valve 19 and orifice plate 20 (to facilitate dispersion of the viscous isinglass) and compressed air at the requisite pressure is fed to the recycle system 15 via flowmeter 21, non-return valve 22 and diffuser head 23. The recirculating system is designed to provide for a suitable residence time to effect adequate mixing of air, clarified liquor and isinglass (usually of the order of 15 seconds). The mixer 16 may, for example, be a Silverson Model 450L powered by a motor capable of pumping up to 15,000 litres per minute along a 5cm internal diameter pipe and fitted with a square hole high shear screen and an impeller capable of 3,000 revs. per minute. The centrifugal pump 17 may be one capable of pumping 13,600 litres per hour with a head of 1 bar.

The feed to the flotation chamber is formed by mixing at junction 24 the output of the recycling system 15 with a feed of pH-adjusted aqueous system which has previously been formed in supply tank 25 and fed to junction 24 via a gear pump 26 and flowmeter 27. The aqueous system is formed in supply tank 25 by input of whey protein concentrate and demineralized water to the tank 25 and the pH adjusted by addition of acid. An agitator 28 is provided in supply tank 25 to ensure that precipitate formed when the pH is adjusted does not settle out in the tank.

In Fig.1, aeration is effected by aerating a recycled stream of clarified liquor and admixing this with the pH-adjusted aqueous system. This is the preferred manner of carrying out aeration in the method of the invention as it enables vigorous agitation to be applied during aeration to ensure that air bubbles are thoroughly broken up and mixed into the liquor to produce a fine dispersion of air bubbles and thus facilitate their adhesion to the floc if aeration of the main feed is undertaken directly only less vigorous agitation can be applied, which in turn affects the efficiency of the flotation process and also substantially narrows the range of pH over which clear supernatant liquors can be obtained. The actual aeration can be effected by injection of air under pressure, or alternatively by venturi suction into a conduit through which the liquor to be aerated is passed.

The isinglass can be added either before or after aeration and either to the feed stream of the flotation chamber or to a recycle stream of clarified liquor, the latter being the preferred method illustrated in Fig. 1, the isinglass solution being fed to the recycle stream either before or after aeration of the recycle stream in recycle system 15.

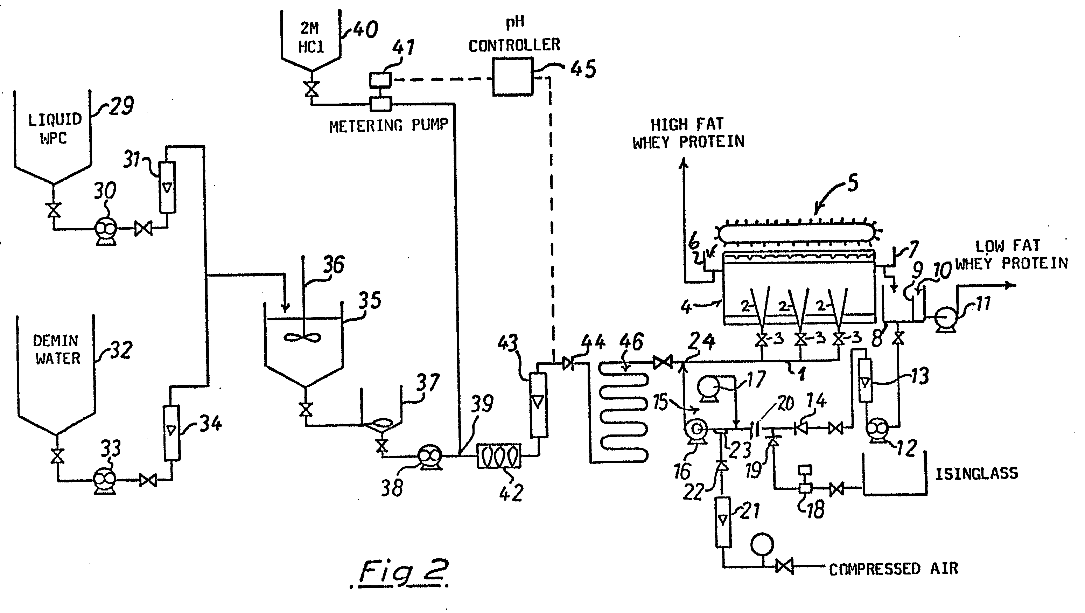

Referring to Fig. 2 of the accompanying drawings, like parts are given the same numerals as in Fig. 1. Essentially the process from mixing point 24 is the same as that described for Fig. 1. The start up procedure to the point where the flotation chamber 4 and the balance tank 8 are full is the same as described above in relation to Fig. 1. The feed of pH adjusted aqueous system is, however, produced in a different manner. Liquid whey protein concentrate made in the manner hereinafter described in Example 1(a) is pumped from container 29 via pump 30 and flowmeter 31 and mixed to the desired dilutions with demineralised water pumped from container 32 via pump 33 and flowmeter 34, and the mixture held in a buffer tank 35 having agitating means 36. The purpose of the buffer tank 35 is to even out any fluctuation in protein content. From the buffer tank 35 the mixture flows into a balance tank 37 which provides a constant head for a supply pump 38. The output of supply pump 38 is mixed at 39 with acid pumped from a supply tank 40 via a metering pump 41 and the mixture passed through a static mixer 42 and flow meter 43 to a non-return valve 44. A pH control unit 45 is arranged to measure the pH of the mixture immediately before valve 44 and to control metering pump 41 to keep the pH value within defined limits. From valve 44 the mixture passes through a holding section 46 in which the pH adjustment induced precipitate is given time to develop before being mixed with the aerated isinglass-containing recycle liquor at 24.

The invention will also be further illustrated by reference to the following Examples.

### Example 1

#### a) Preparation of clarified liquor for starting the flotation process.

Cheddar cheese whey was centrifuged, pasteurised at 72°C for 15 secs and cooled to 50°C. It was subjected to ultrafiltration and diafiltration to produce a whey protein concentrate (WPC) with a total solid content of 23.8% by weight, a total protein content of 19.13% by weight, a fat content of 2.60% by weight and an ash content of 0.66% by weight. 870 kg of this WPC was pumped into a sedimentation silo and diluted with demineralised water to give a total protein content of 1.06% by weight. 2M hydrochloric acid was added to pH adjust the WPC solution from pH 6.25 to pH 4.40 in the presence of good agitation.

2.7 kg of isinglass were dispersed in 96 gallons (436.5 l) of chilled demineralised water and allowed to hydrate for two hours. This volume represented 80% of the final volume. After the isinglass had hydrated the whole solution was passed through an in-line high speed, high shear mixer and stored in a silo under continuous agitation. The remaining chilled demineralised water representing 20% of the final make up volume was used to dilute the isinglass solution to 0.5% (wt/vol).

The 0.5% w/w isinglass solution was rapidly pumped into the well agitated acidified WPC in the sedimentation silo, the height of which was 2.6 metres, and after one minute of further intense agitation the solution was left to settle without disturbance for 16 hours.

Flotation process (cf Fig. 1 of the drawings).

WPC produced by the method stated in (a) above had the following properties: total solid content of 24.25% by weight, total protein content of 19.64% by weight, a fat content of 2.28% by weight and an ash content of 0.57% by weight. 4,710 kg of this WPC was diluted in a 25,000 gallon (113652 l) silo with demineralized water and sufficient 2M hydrochloric acid was added to give a final pH of 4.36, the protein content of the pH adjusted diluted WPC being 0.98% by weight.

15.9 kg of isinglass was dispersed in 560 gallons (2554 l) of chilled demineralised water and allowed to hydrate for 2 hours. The whole solution was passed through an in-line high speed high shear mixer and stored in a silo with continuous agitation. A further 140 gallons (636 l) of chilled demineralised water was then added to give an isinglass concentration of 0.5% w/v.

The clarified liquor produced in (a) above was pumped to the flotation chamber until the flotation tank 4 and the balance tank 8 for the recycle loop was filled.

The recycle pump was started and set to deliver 1.1 m$^3$h$^{-1}$. The dosing pump 18 was set to deliver isinglass solution (0.5% w/v) at a rate of 125 l/h; the pumps in recycle loop were started. Air was added at a rate of 846 l/h. When the recycle stream was foaming the feed pump 26 was started and set to deliver 3.5 m$^3$h$^{-1}$. The main unclarified feed was gently blended with the recycle fraction and flowed via the diffuser cones into the flotation chamber. The valves beneath the cones were adjusted to prevent uneven flow which would set up excess turbulence within the flotation chamber. After start-up the foam accumulated at the top of the flotation chamber and was removed by the scraper system.

The Tables II and III summarise the conditions used.

Table II

| Feed Rate m$^3$/h | Recycle Rate m$^3$/h | Recycle Feed Ratio | Isinglass Rate l/h | Isinglass Feed (ml/l) | Air Rate l/h | Sludge Rate kg/h | Sludge Solid % | Sludge Feed % |
|---|---|---|---|---|---|---|---|---|
| 3.5 | 1.1 | 0.31 | 125 | 36 | 846 | 225 | 6.0 | 6.4 |

Table III

| Downflow Velocity m/h | Residence Time (mins) | Precipitable Solids In Feed Stream (g/l) | Solid Loading Rate kg/h.m$^2$ | Air to Solid Ratio (l/g) |
|---|---|---|---|---|
| 0.82 | 98 | 3.37 | 2.36 | 0.068 |

The clarified liquor collected was pH adjusted with 2M KOH to pH 6.31, heated to 50°C and subjected to ultrafiltration to achieve a 21.6% refractive index. The resulting low fat whey protein concentrate chilled prior to spray drying at inlet temperature 165°C and outlet of 80°C. The properties of the low fat powder produced are set forth in Table IV.

Table IV

| Moisture % | Fat % | Ash % | Lactose % | Total Protein (N×6.38) % | NPN as Nitrogen % | True Protein % |
|---|---|---|---|---|---|---|
| 6.2 | 0.38 | 2.60 | Not detected | 85.7 | 1.46 | 76.4 |

The high fat sludge removed by the scraper system was deaerated by shearing the foam with a high speed centrifugal pump. It was then pH adjusted to 6.3 before being pasteurised at 80°C for 9 secs and concentrated on the evaporator to 32% refractive index (25% T.S.). The sludge was then spray dried at inlet temperature 165°C and outlet of 80°C. The properties are set forth in Table V.

### Table V

| Moisture % | Fat % | Total Protein % | Ash % | pH |
|---|---|---|---|---|
| 4.75 | 23.6 | 63.6 | 0.94 | 6.25 |

## Examples 2 to 7.

Example 1 was repeated except that the conditions used were those set out in Examples 2 to 7 set forth in Table VI below. In each run the low fat whey protein was ultrafiltrated and spray dried. In Examples 2 and 5 two runs were made, in each case the powdered whey protein concentrate from the two runs being combined into a single bulk product.

Random samples were taken from each of the products of Examples 2 to 7 (two samples being taken in the case of each of Examples 4, 5 and 6). The analysis of the samples is set out in Table VII below.

### Table VI

| Ex. | | Feed rate l/h | Recycle Rate l/h | Isinglass solution dosing rate l/h | Sludge flow rate kg/h | Solid loading rate kg/h.m$^2$ | Air Flow rate l/h | Air/solid ratio l/g | % Total protein in Feed Stream | pH of Feed |
|---|---|---|---|---|---|---|---|---|---|---|
| 2 | a | 3400 | 1100 | 136 | 194 | 2.20 | 846 | 0.073 | 1.04 | 4.42 |
| | b | 3500 | 1100 | 136 | 273 | 2.26 | 846 | 0.071 | 1.04 | 4.42 |
| 3 | | 3000 | 1300 | 123 | 156 | 2.35 | 677 | 0.055 | 1.02 | 4.39 |
| 4 | | 3000 | 1300 | 127 | 174 | 2.64 | 846 | 0.061 | 1.05 | 4.41 |
| 5 | a | 3000 | 1000 | 113 | 175 | 2.06 | 761 | 0.071 | 1.06 | 4.43 |
| | b | 3200 | 1000 | 123 | 185 | 2.20 | 761 | 0.070 | 1.06 | 4.43 |
| 6 | | 2600 | 1400 | 98 | 179 | 2.08 | 846 | 0.077 | 1.02 | 4.33 |
| 7 | | 3500 | 1100 | 125 | 225 | 2.36 | 846 | 0.068 | 0.98 | 4.36 |

### Table VII

| Example | Sample | % Moisture | % Fat | % Ash | % Lactose | Total Protein Nx6.38 | NPN as Nitrogen | Na ppm | K ppm | Ca ppm | Mg ppm | P ppm |
|---|---|---|---|---|---|---|---|---|---|---|---|---|
| 2 | | 7.0 | 0.90 | 2.79 | 2.12 | 84.7 | 1.53 | 1091 | 5842 | 5745 | 545 | 1765 |
| 3 | | 6.74 | 0.65 | 3.23 | ND | 85.48 | 1.09 | 820 | 8494 | 4979 | 605 | 1068 |
| 4 | a | 6.66 | 0.90 | 2.56 | ND | 86.09 | 1.31 | 559 | 5031 | 4844 | 466 | 983 |
| | b | 8.02 | 0.70 | 2.48 | 1.61 | 82.94 | 1.30 | 672 | 5279 | 4902 | 495 | 1189 |
| 5 | a | 6.34 | 0.63 | 2.24 | ND | 86.01 | 1.36 | 518 | 5393 | 4526 | 433 | 954 |
| | b | 5.64 | 0.76 | 2.29 | ND | 86.98 | 1.40 | 481 | 5257 | 4412 | 446 | 1039 |
| 6 | a | 7.29 | 1.08 | 2.58 | ND | 85.11 | 1.45 | 457 | 5348 | 5254 | 410 | 1123 |
| | b | 6.98 | 1.11 | 2.60 | ND | 85.30 | 1.45 | 478 | 5559 | 4921 | 433 | 1114 |
| 7 | | 6.16 | 0.38 | 2.60 | ND | 85.66 | 1.46 | 748 | 5365 | 4871 | 508 | 1626 |

ND = Not Detected

## Claims

1. A process for producing a low-fat whey protein which comprises forming an aqueous system containing whey protein in an amount not greater than 1.5% by weight and having an ash:protein ratio not exceeding 0.08:1, adjusting the pH of the system to a value in the range of from 4.0 to 4.8 and separating the resultant precipitate from the aqueous system by air flotation in the presence of isinglass.

2. A process as claimed in claim 1, in which the pH of the system is adjusted to a value in the range of 4.2 to 4.4.

3. A process as claimed in claim 2, in which the pH of the system is adjusted to a value of substantially 4.3.

4. A process as claimed in any of the preceding claims, in which the aqueous system has an ash:protein ratio in the range of 0.05:1 to 0.025:1.

5. A process as claimed in any of claims 1 to 4, in which the aqueous system is formed by diluting a liquid whey protein concentrate with demineralised water.

6. A process as claimed in claim 5, in which the whey protein concentrate is produced by ultrafiltration of a clarified whey.

7. A process as claimed in claim 6, in which the whey protein concentrate has a total protein to total solids ratio of at least 75%.

8. A process as claimed in any of the preceding claims, in which the isinglass is present in an amount to provide at least 0.18 gram thereof per litre of pH adjusted aqueous system.

9. A process as claimed in any of the preceding claims, in which the isinglass is added in the form of an aqueous solution containing up to 5 grams of isinglass per litre.

10. A process as claimed in any of the preceding claims, in which a portion of the aqueous system after separation of the precipitate is recycled and mixed with the pH adjusted aqueous system before the air flotation separation step.

11. A process as claimed in claim 10, in which the whole of the air required for the air flotation step is mixed with the recycled aqueous system.

12. A process as claimed in claims 10 or 11, in which the whole of the isinglass added is mixed with the recycled aqueous system.

13. A process as claimed in any of the preceding claims, in which the total protein content of the aqueous system before pH adjustment is from 1.0 to 1.2% by weight.

14. A process as claimed in any of the preceding claims, in which the temperature is maintained at from 12°C to 25°C.

15. A process as claimed in claim 14, in which the temperature is maintained at substantially 20°C.

16. A process as claimed in any of the preceding claims, in which the separated precipitate is converted by spray drying into a high fat whey protein concentrate powder.

17. A process as claimed in any of the preceding claims, in which the aqueous system after separation of the precipitate therefrom is subjected to ultrafiltration to form a liquid whey protein concentrate and the concentrate spray dried to form a low-fat whey protein concentrate powder.

## Patentansprüche

1. Verfahren zum Herstellen eines Molkeproteins mit niedrigem Fettgehalt, bei dem ein wässriges System mit einem Gehalt an Molkeprotein von nicht mehr als 1,5 Gew.-% und mit einem Verhältnis von Asche zu Protein von nicht mehr als 0,08 zu 1 gebildet wird, der pH-Wert des Systems auf einen Wert im Bereich von 4,0–4,8 eingestellt wird und der sich ergebende Niederschlag von dem wässrigen System durch Luftflotieren unter Anwesenheit von Fischleim getrennt wird.

2. Verfahren nach Anspruch 1, bei dem der pH-Wert des Systems auf einen Wert im Bereich von 4,2–4,4 eingestellt wird.

3. Verfahren nach Anspruch 2, bei dem der pH-Wert des Systems auf einen Wert von im wesentlichen 4,3 eingestellt wird.

4. Verfahren nach einem der vorhergehenden Ansprüche, bei dem das wässrige System ein Verhältnis von Asche zu Protein im Bereich von 0,05 zu 1 bis 0,025 zu 1 aufweist.

5. Verfahren nach einem der Ansprüche 1–4, bei dem das wässrige System durch Verdünnen eines flüssigen Molkeproteinkonzentrats mit demineralisiertem Wasser gebildet wird.

6. Verfahren nach Anspruch 5, bei dem das Molkeproteinkonzentrat durch Ultrafiltration einer geklärten Molke hergestellt wird.

7. Verfahren nach Anspruch 6, bei dem das Molkeproteinkonzentrat ein Verhältnis von gesamtem Protein zu gesamtem Feststoff von mindestens 75% aufweist.

8. Verfahren nach einem der vorhergehenden Ansprüche, bei dem der Fischleim in einer Menge vorhanden ist, um mindestens 0,18 g davon pro Liter des pH-eingestellten wässrigen Systems zu liefern.

9. Verfahren nach einem der vorhergehenden Ansprüche, bei dem der Fischleim in der Form einer wässrigen Lösung, die bis zu 5 g Fischleim pro Liter enthält, hinzugefügt wird.

10. Verfahren nach einem der vorhergehenden Ansprüche, bei dem ein Teil des wässrigen Systems nach Trennung des Niederschlages zurückgeführt und mit dem pH-eingestellten wässrigen System vor dem Luftflotierungstrennschritt vermischt wird.

11. Verfahren nach Anspruch 10, bei dem die gesamte für den Luftflotierungsschritt erforderliche Luft mit dem zurückgeführten wässrigen System vermischt wird.

12. Verfahren nach Anspruch 10 oder 11, bei dem der gesamte hinzugefügte Fischleim mit dem zurückgeführten wässrigen System vermischt wird.

13. Verfahren nach einem der vorhergehenden Ansprüche, bei dem der gesamte Proteingehalt des wässrigen Systems vor der Einstellung des pH-Wertes zwischen 1,0 und 1,2 Gew.-% beträgt.

14. Verfahren nach einem der vorhergehenden Ansprüche, bei dem die Temperatur auf einem Wert von 12°C–25°C gehalten wird.

15. Verfahren nach Anspruch 14, bei dem die Temperatur auf im wesentlichen 20°C gehalten wird.

16. Verfahren nach einem der vorhergehenden Ansprüche, bei dem der abgetrennte Niederschlag durch Sprühtrocknung in ein Molkeproteinkonzentratpulver mit hohem Fettgehalt umgewandelt wird.

17. Verfahren nach einem der vorhergehenden Ansprüche, bei dem das wässrige System nach der Abtrennung des Niederschlages einer Ultrafiltration zur Bildung eines flüssigen Molkeproteinskonzentrats unterworfen und das Konzentrat zur Bildung eines Molkeproteinkonzentratpulvers mit niedrigem Fettanteil sprühgetrocknet wird.

## Revendications

1. Procédé pour la production d'une protéine de petit-lait pauvre en matière grasse, qui consiste à former un système aqueux contenant de la protéine de petit-lait en une quantité non supérieure à 1,5% en poids et dont le rapport cendre: protéine ne dépasse pas 0,08:1, à ajuster le pH du système à une valeur située dans la plage de 4,0 à 4,8 et à séparer le précipité résultant du système aqueux par flottation à l'air en présence d'ichtyocolle.

2. Procédé tel que revendiqué dans la revendication 1, dans lequel le pH du système est ajusté à une valeur située dans la plage de 4,2 à 4,4.

3. Procédé tel que revendiqué dans la revendication 2, dans lequel le pH du système est ajusté à une valeur sensiblement égale à 4,3.

4. Procédé tel que revendiqué dans l'une quelconque des revendications précédentes, dans lequel le système aqueux présente un rapport cendre: protéine de 0,05:1 à 0,025:1.

5. Procédé tel que revendiqué dans l'une quelconque des revendications 1 à 4, dans lequel le système aqueux est formé en diluant un concentré protéique liquide de petit-lait avec de l'eau déminéralisée.

6. Procédé tel que revendiqué dans la revendication 5, dans lequel le concentré protéique de petit-lait est produit par ultrafiltration d'un petit-lait clarifié.

7. Procédé tel que revendiqué dans la revendication 6, dans lequel le concentré protéique de petit-lait présente un rapport de la protéine totale aux matières solides totales d'au moins 75%.

8. Procédé tel que revendiqué dans l'une quelconque des revendications précédentes, dans lequel l'ichtyocolle est présente en une quantité qui en fournit au moins 0,18 gramme par litre de système aqueux à pH ajusté.

9. Procédé tel que revendiqué dans l'une quelconque des revendications précédentes, dans lequel l'ichtyocolle est ajoutée sous la forme d'une solution aqueuse contenant au maximum 5 grammes d'ichtyocolle par litre.

10. Procédé tel que revendiqué dans l'une quelconque des revendications précédentes, dans lequel une portion du système aqueux obtenu après la séparation du précipité est recyclée et mélangée avec le système aqueux à pH ajusté avant l'étape de séparation par flottation à l'air.

11. Procédé tel que revendiqué dans la revendication 10, dans lequel la totalité de l'air nécessaire à l'étape de flottation à l'air est mélangée avec le système aqueux recyclé.

12. Procédé tel que revendiqué dans la revendication 10 ou 11, dans lequel la totalité de l'ichtyocolle ajoutée est mélangée avec le système aqueux recyclé.

13. Procédé tel que revendiqué dans l'une quelconque des revendications précédentes, dans lequel la teneur en protéine totale du système aqueux avant l'ajustement du pH est de 1,0 à 1,2% en poids.

14. Procédé tel que revendiqué dans l'une quelconque des revendications précédentes, dans lequel la température est maintenue entre 12°C et 25°C.

15. Procédé tel que revendiqué dans la revendication 14, dans lequel la température est maintenue sensiblement à 20°C.

16. Procédé tel que revendiqué dans l'une quelconque des revendications précédentes, dans lequel le précipité séparé est transformé par séchage par atomisation en une poudre de concentré protéique de petit-lait riche en matière grasse.

17. Procédé tel que revendiqué dans l'une quelconque des revendications précédentes, dans lequel le système aqueux obtenu après en avoir séparé le précipité est soumis à une ultrafiltration pour former un concentré protéique liquide de petit-lait et le concentré est séché par atomisation pour former une poudre de concentré protéique de petit-lait pauvre en matière grasse.

ACID

DEMINERALIZED WATER

WHEY PROTEIN CONCENTRATE

UNCLARIFIED FEED

25

28

26

27

24

1

HIGH FAT WHEY PROTEIN

5

6

7

4

2  2  2

3  3  3

8

10

9

LOW FAT WHEY PROTEIN

11

17

15

16

13

12

20  14

23

22

19

21

18  ISINGLASS

COMPRESSED AIR

EP 0 243 544 B1

Fig 1.

_Fig 2_

EP 0 243 544 B1